# EUROPEAN PATENT SPECIFICATION

(11) **EP 0 385 777 B1**
(45) Date of publication and mention of the grant of the patent: **18.10.1995**
(21) Application number: 90302193.9
(22) Date of filing: 01.03.1990
(51) Int. Cl.: G09G 5/24

(54) **Apparatus for and method of generating pattern signals for controlling a display and/or a printer**
Methode und Vorrichtung zur Erzeugung eines Muster-Signals zur Steuerung einer Anzeige und/oder eines Druckers
Méthode et dispositif pour la génération des signaux de texture pour la commande d'un dispositif d'affichage ou/et une imprimante

(30) Priority: 02.03.1989 JP 51298/89
(43) Date of publication of application: 05.09.1990
(73) Proprietor: SEIKO EPSON CORPORATION, Shinjuku-ku Tokyo (JP)
(72) Inventor: Kajimoto, Kazuhiro, c/o Seiko Epson Corporation, Suwa-shi, Nagano-ken (JP)
(74) Representative: Sturt, Clifford Mark

(56) References cited:
- EP-A- 0 215 664
- GB-A- 2 147 474
- US-A- 4 331 955
- COMPUTER VISION, GRAPHICS, AND IMAGE PROCESSING, vol. 40, no. 1, October 1987, pages 79-94, Duluth, MN, US; V.S. NALWA: "Edgel Aggregation and Edge Description"
- THE TRANSACTIONS OF THE INSTITUTE OF ELECTRONICS, INFORMATION AND COMM. ENGINEERS, vol. E72, no. 5, May 1989, pages 661-669, Tokyo, JP; N. MURAYAMA: "A polynomial for automatic contour vector coding"

## Description

The present invention is directed to apparatus for and a method of generating pattern signals for controlling a display and/or a printer.

Character pattern signal generating apparatus for generating dot patterns from so called outline font data is known, in which character pattern data is stored as pieces of outline information.

In recent times, a sharp increase in the number of dots which form a character pattern has been required consistent with enhancement in quality of the printing output of a word processor or the like. This results in the problem that the storage capacity of a character generator for storing the characters in the form of dot pattern data needs to be increased.

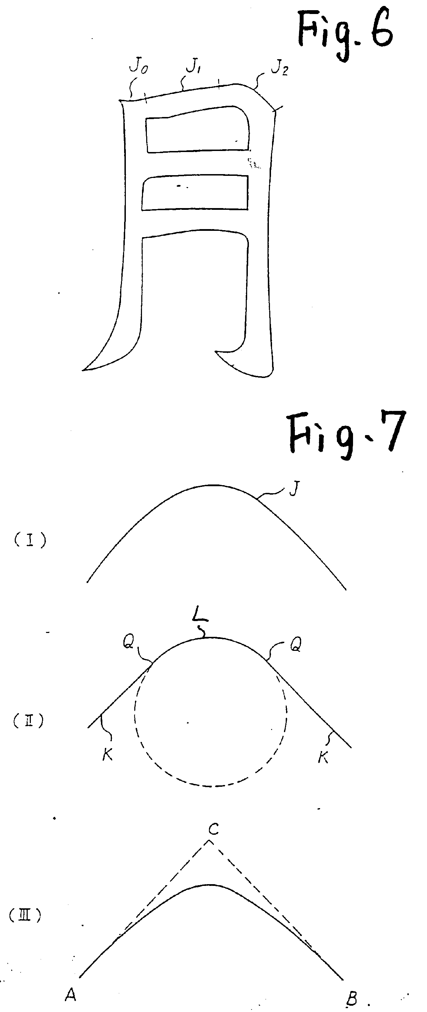

To obviate the foregoing problem, there has been proposed a so called outline system (see for example GB-A-2 147 474), in which: an outline of a character is split into a plurality of regions J₀, J₁, J₂ ... as shown in Figure 6; co-ordinates for the initial points and terminal points of each of these regions J₀, J₁, J₂ ... are stored as data; and the interior of the pattern is filled in by means of dot signals supplied at the time of outputting the outline data.

Based on this system, it is possible not only to produce high quality characters with a large number of dots, by reducing the amount of data to be stored, but also to enlarge and diminish the size of the character, by effecting arithmetic operations on the co-ordinates, thereby creating the advantage that a variety of character sizes can be accommodated.

There arises, however, a further problem peculiar to such outline data. An approximation of a curve J forming a region of a character outline, as illustrated in Figure 7 (1), is made typically by straight lines K, K and a circular arc L (Figure 7 (II)). Therefore, the storage capacity has to be increased, especially when precise approximation of a curvi-linear region is required, because a substantial number of circular arcs having different radii have to be employed.

With the aim of eliminating this problem, there has also been proposed a method (represented in Figure 7 (III)) of making an approximation by employing a conic spline, which prescribes the curve with three points, i.e. an initial point A and a terminal point B, together with a control point C at an inter-section of the tangent lines from the points A and B.

A conic spline function serves to provide an approximation of a character outline region by a smooth curve and using a small storage capacity. On the other hand, employing a conic spline function renders the arithmetic operations complicated so that much time elapses before corresponding dot signals are output.

It is an object of the present invention to avoid or reduce the foregoing problems inherent in the prior art.

According to one aspect of the present invention, there is provided apparatus for generating pattern signals for controlling a display device and/or printer of the type which generate images by means of a series of dots, said apparatus comprising outline data storage means for storing data representing pattern outlines, each pattern outline being divided into regions and the outline data representing respective outline regions in terms of conic lines, outline reproducing means responsive to a control signal for reading out selected outline data from the outline data storage means and for reproducing a pattern outline function from the selected outline data, and converting means responsive to an output from the outline reproducing means for generating pattern signals representing the whole pattern, characterised in that each respective outline region is represented as an initial point of, an auxiliary point on, and a terminal point of the associated conic line, and in that the outline reproducing means include selecting means arranged to calculate a linear function for a straight line joining respective ones of the points, to establish whether the maximum gap between the straight and the conic lines joining the respective points has a value less than a reference value, said reference value being a function of a dot size of the display device or printer, and, if it has, to select the linear function for supply to the converting means.

According to another aspect of the invention, there is provided a method of generating pattern signals for controlling a display device and/or printer of the type which generate an image as a series of dots, comprising dividing a pattern outline into regions and representing respective regions in terms of conic lines, formulating an outline function for each region in response to a control signal, and converting the outline functions into pattern signals representing the whole pattern, characterised by representing each respective outline region as an initial point of, an auxiliary point on, and a terminal point of the associated conic line, and selecting a linear function as the outline function if the maximum gap between a straight line and the conic line joining respective ones of the points has a value less than a reference value, said reference value being a function of the dot diameter of the display device and/or printer.

In the preferred embodiment of the invention as described below, the control point of the conic line for each respective outline region of the character outline is converted into the auxiliary point of the conic line. With this arrangement, it is possible to reproduce the conic line, by use of the auxiliary point, in a standard size reproduction or enlargement mode. In a scale down mode, the outline function can be provided by straight lines through the initial, terminal and auxiliary points.

As a result, the speed of generation of dot patterns may be increased, in that certain arithmetic processes may be omitted in some instances.

Consequently, processing may be speeded up while maintaining printing quality by the selection of the linear functions in accordance with dot size of an output device so that futile arithmetic processes may be omitted.

The present invention will be described further, by way of example, with reference to the accompanying drawings, in which:-
Figure 1 is a block diagram of one embodiment of apparatus for generating a character pattern signal according to the present invention;
Figure 2 is a schematic diagram depicting a data arrangement in an outline data storage circuit of the character pattern signal generating apparatus of Figure 1;
Figure 3 is a flow chart representing the operation of the character pattern signal generating apparatus of Figure 1;
Figure 4 is a diagram for assistance in explaining the operation of the character pattern signal generating apparatus of Figure 1;
Figure 5 is a diagram for assistance in explaining a basis for the functioning of the character pattern signal generating apparatus of Figure 1; and
Figures 6 and 7 are explanatory diagrams each representing a conventional method of producing character pattern outline data.

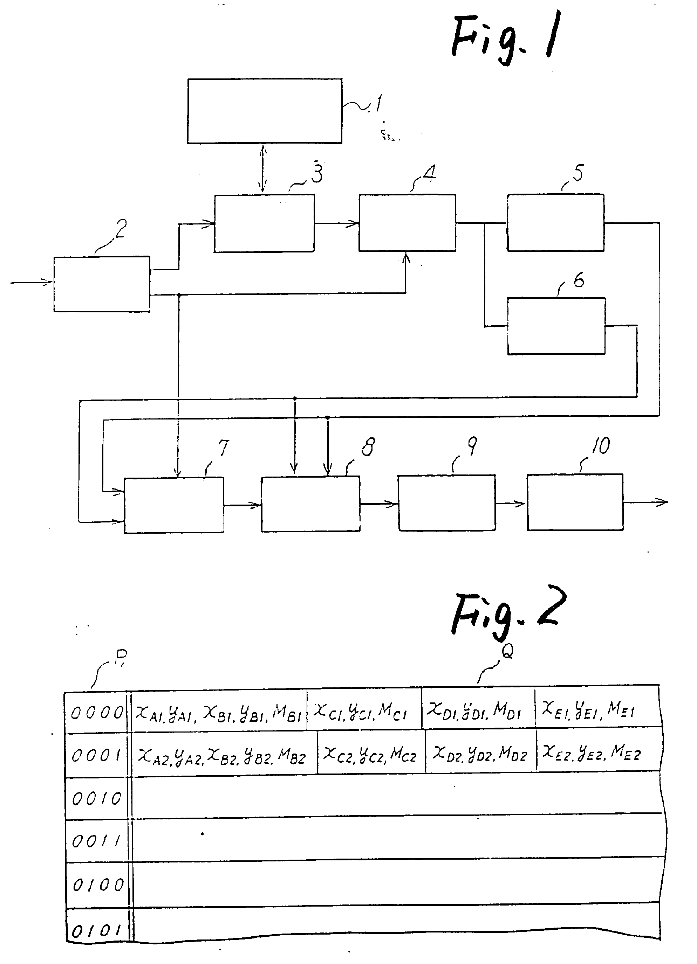

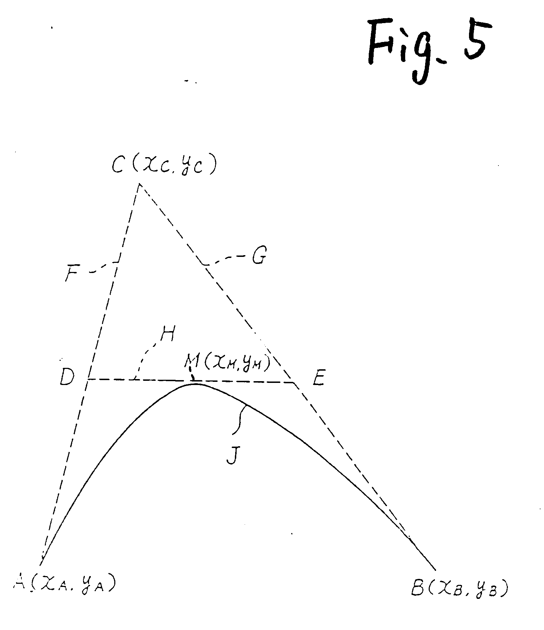

Figure 5 is an explanatory diagram representing a basis for the embodiment of the present invention shown in Figure 1. In Figure 5, the symbol J designates a conic spline curve, which approximates a curve J₂ (see Figure 6) constituting a part of an outline of a character. Tangent lines F and G extend, respectively, from an initial point A and a terminal point B of the curve J, and an inter-section thereof is defined as a control point C. A line segment H, which connects mid-points D and E of tangent lines F and G between the initial and terminal points A and B and the control point C, has the property that it is contiguous to the conic spline curve J at its mid-point M.

By the use of a parametric function t, an arbitrary point X̅(t) on the conic spline curve is typically expressed as:$\overline{\text{X}} \text{(t) =} \frac{\text{W₀(1-t)²} {\overline{\text{X}}}_{\text{A}} \text{+ 2W₁t(1-t)} {\overline{\text{X}}}_{\text{C}} \text{+ W₂t²} {\overline{\text{X}}}_{\text{B}}}{\text{W₀(1-t)² + 2W₁t(1-t) + W₂t²}}$
where X̅_{A} represents the co-ordinates (X_{A}, Y_{A}) of the initial point A, X̅_{B} represents the co-ordinates (X_{B}, Y_{B}) of the terminal point B, and X̅_{C} represents the co-ordinates (X_{C}, Y_{C}). W₀, W₁ W₂ are the co-efficients which determine a curvi-linear configuration, and hence the curvi-linear configuration is specified. When W₀ = W₁ = W₂ = 1, equation (1) is expressed as follows:$\overline{\text{X}} \text{(t) = (1-t)²} {\overline{\text{X}}}_{\text{A}} \text{+ 2t(1-t)} {\overline{\text{X}}}_{\text{C}} \text{+ t²} {\overline{\text{X}}}_{\text{B}}$
where 0 ≦ t ≦ 1.

From equation (2), arbitrary co-ordinates (X(t), Y(t)) on the curve expressed by the parametric function are given by:${\text{X(t) = (1-t)²X}}_{\text{A}} {\text{+ 2t(1-t)X}}_{\text{C}} {\text{+ t²X}}_{\text{B}}$${\text{Y(t) = (1-t)²Y}}_{\text{A}} {\text{+ 2t(1-t)Y}}_{\text{C}} {\text{+ t²Y}}_{\text{B}} \text{.}$

On the basis of initial point co-ordinates (X_{A}, Y_{A}) and mid-point co-ordinates (X_{M}, Y_{M}) and terminal point co-ordinates (X_{B}, Y_{B}, the co-ordinates(X_{C}, Y_{C}) of the control point C are given by:${\text{X}}_{\text{C}} \text{=} \frac{{\text{4X}}_{\text{M}} {\text{- X}}_{\text{A}} {\text{- X}}_{\text{B}}}{\text{2}}$${\text{Y}}_{\text{C}} \text{=} \frac{{\text{4Y}}_{\text{M}} {\text{- Y}}_{\text{A}} {\text{- Y}}_{\text{B}}}{\text{2}}$

Namely, when given the initial point co-ordinates, the mid-point co-ordinates and the terminal point co-ordinates of the curve, the control point of the conic spline function can be arithmetically obtained. Hence, it is possible to reproduce the curve on the basis of the co-ordinates of the initial point, the mid-point and the terminal point.

Thus, when converting the character outline into dot signals employing the curve 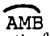 expressed by the conic spline function, a length ℓ of the curve 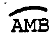 is computed, and a partition number N is obtained from the length ℓ and a dot size, a so called resolving power, of an output unit.

Supposing that a unit length of a co-ordinate scale of the outline data corresponds to the size of 1 dot, the length of the curve 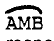 becomes directly the partition number N with respect to an amount of 1-dot variations of the curve.

Now, the apparatus and method of the present invention will be described in greater detail with reference to Figures 1 to 4.

Turning to Figure 1, there is illustrated one embodiment of the invention featuring an outline font data storage circuit 1 in which: a character code is, as depicted in Figure 2, converted into an address P; an outline for a character of a standard size is split into a plurality of sub-curves; respective sub-curves J₀, J₁, J₂ ... (Figure 6) are expressed by the conic spline function; and in this expression initial point co-ordinates (X_{AJ}, Y_{AJ}), terminal point co-cordinates (X_{BJ}, Y_{BJ}) and an auxiliary co-ordinate (M_{J}) of the sub-curves are stored as data Q. (In the case of a continuous curve, only the co-ordinates of the terminal point and of the auxiliary point are stored, because the terminal point co-ordinates of the preceding sub-curve serve as the initial point co-ordinates of the next sub-curve).

A data separating circuit 2 is constructed to separate a character code signal output by a host unit (not shown) from an attribute signal representing a character size. The data separating circuit 2 outputs the character code signal to a read out circuit 3 and the attribute signal to a co-ordinate arithmetic circuit 4 described below.

The co-ordinate arithmetic circuit 4 functions to convert the co-ordinates of the initial, terminal and auxiliary points read from the storage circuit 1 according to the character size. The co-ordinate arithmetic circuit 4 then outputs the co-ordinate data stored therein directly to an outline reproducing circuit 5 when the character size required is the same as a standard size, i.e. when there is no reduction, and outputs appropriately modified co-ordinates to the outline reproducing circuit 5 when the character size specified is larger than the standard size. The co-ordinate arithmetic circuit 4 furthermore modifies the co-ordinates at the initial, terminal and auxiliary points according to a scale down rate, when a character size smaller than the standard size is specified, and outputs the results both to the outline reproducing circuit 5 and to a line segment generating circuit 6.

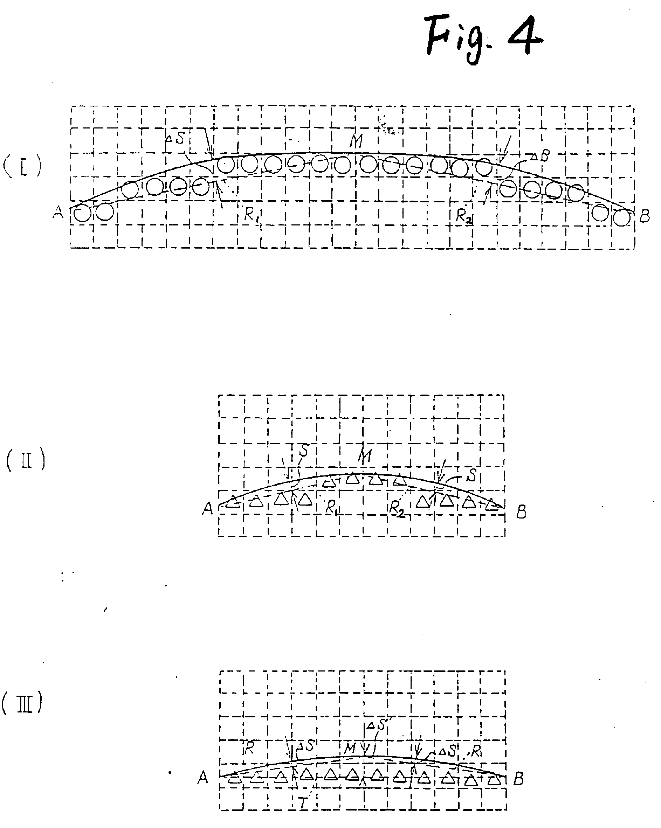

The outline reproducing circuit 5 reproduces the character outline as a conic spline curve on the basis of the received co-ordinates of the initial, terminal and auxiliary points. The line segment generating circuit 6 is arranged to compute line segments R₁ and R₂ (Figure 4), which connect the initial point to the auxiliary point and also the auxiliary point to the terminal point, from the received co-ordinate data of the initial, terminal and auxiliary points, and further to compute a line segment T connecting the initial point to the terminal point.

A maximum gap arithmetic circuit 7 serves to make a comparison of data from the outline reproducing circuit 5 and the line segment generating circuit 6, on receiving a command selecting a character size smaller than the standard size, and to calculate a maximum gap ΔS (Figure 4) between the curve and the various line segments. The maximum gap ΔS is then compared with a reference value ΔD, e.g. one half of a dot diameter. If the maximum gap ΔS is larger than the reference value, a signal for selecting the conic spline curve is output by the circuit 7 to a data selecting circuit 8. Alternatively, if the maximum gap ΔS is smaller than the reference value, the circuit 7 outputs similarly to the data selecting circuit 8 a signal for selecting, as outline data, the line segments which connect the initial point to the auxiliary point and the auxiliary point to the terminal point or the line segment which connects the initial point to the terminal point.

When the specified character size is equal to or larger than the standard size, the data selecting circuit 8 supplies to a buffer circuit 9 the data of the outline reproducing circuit 5. When the scale down size is specified, the data selecting circuit 8 supplies to the buffer circuit 9 the signals of the outline reproducing circuit 5 or of the line segment generating circuit 6 depending on the signal transmitted from the maximum gap arithmetic circuit 7.

A dot signal generating circuit 10 receives the outline data stored in the buffer circuit 9 and is adapted to supplement such data with the dot signals relating to an internal region of the outline.

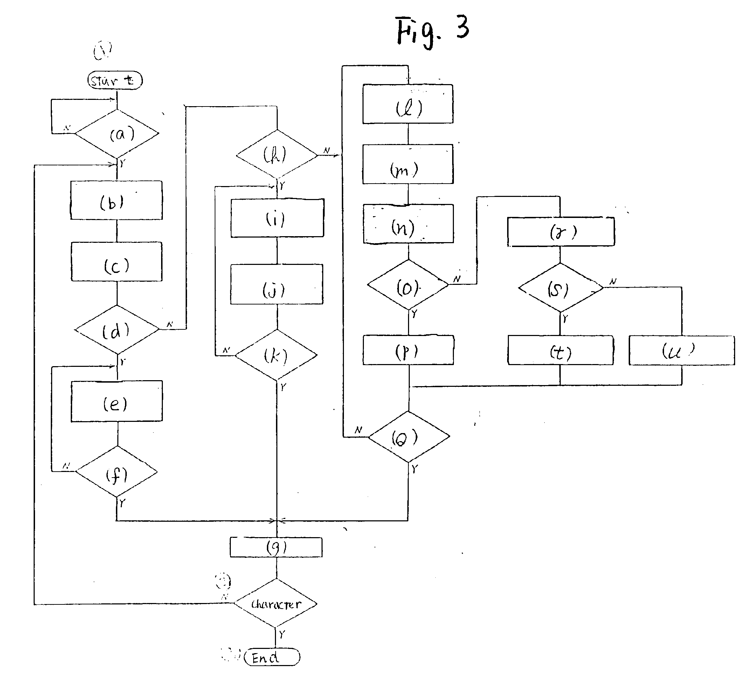

The operation of the above apparatus will now be described in conjunction with the flow chart of Figure 3.

An outline of a character conceived as an original pattern is split into a plurality of regions suitable for making an approximation by the use of the conic spline functions. Initial points, terminal points and control points are established with respect to the individual regions. The control points are converted into auxiliary points by the above described method.

Character codes are stored in the form of addresses in the outline data storage circuit 1 at a stage when all the data on one character is obtained in the foregoing manner.

After the outline data on all the characters has been stored, and when character signals are input from the host unit (step a), the character signals are separated into character code signals and attribute signals by means of the data separating circuit 2. The outline data storage circuit 1 is accessed by the read out circuit 3 by means of the character code signals, while the attribute signals are input into the co-ordinate arithmetic circuit 4 for setting a character size (step b).

When the preparations for read out are completed in this manner, the read out circuit 3 initiates read out of the outline data representing the conic spline functions for the respective regions, which combine into the shape of the outline of a corresponding character (step c).

### The case where the character is the standard size.

Where the character signals output from the host unit specify the standard size (step d), the co-ordinate arithmetic circuit 4 outputs the read outline data directly to the outline reproducing circuit 5 by which the character outline is formed (step e). The character outline is stored in the buffer circuit 9 via the data selecting circuit 8.

At the stage of forming the outline pertaining to one character (step f), a conversion into dot pattern signals for supplementing and filling in the outline regions is effected by the dot signal generating circuit 10 (step g), and the dot pattern signals are then output to a printer or the like.

### The case where the character is to be enlarged.

If the character signals transmitted from the host unit indicate an enlargement of the standard size (step h), the co-ordinate arithmetic circuit 4 converts the co-ordinates of the initial, terminal and auxiliary points, which constitute the outline data given from the read out circuit 3, into co-ordinates which accord with a specified degree of enlargement (step i). The converted co-ordinates are output to the outline reproducing circuit 5. The outline reproducing circuit 5 in turns computes a conic spline function consistent with the converted co-ordinates (step j), and outputs the function to the buffer circuit 9 through the data selecting circuit 8. An enlarged outline associated with one character is thus formed (step k), at which stage the dot signal generating circuit 10 converts the enlarged outline stored in the buffer circuit 9 into dot pattern signals (step g).

### The case where the character is to be scaled down.

If a character smaller than the standard size is specified by the character signals transmitted from the host unit (steph h), the co-ordinate arithmetic circuit 4 converts the co-ordinates of the initial, terminal and auxiliary points, which constitute the outline data given from the read out circuit 3, into co-ordinates consistent with a specified rate of reduction. The converted co-ordinates are output to the line segment generating circuit 6 as well as to the outline reproducing circuit 5. The outline reproducing circuit 5 computes a conic spline function determined by the input co-ordinates of the initial, terminal and auxiliary points according to the rate of reduction (step m). The line segment generating circuit 6 generates line segments R₁ and R₂, which connect the initial point co-ordinates to the auxiliary point co-ordinates and the auxiliary point co-ordinates to the terminal point co-ordinates (step n). The maximum gap arithmetic circuit 7 then computes a maximum gap ΔS between each line segment R and the conic spline.

If the maximum gap ΔS is greater than the reference value (Figure 4 (I)) (step o), the outline data for the conic spline function is output (step p). On the other hand, if the maximum gap ΔS between a curve of the conic spline and one of the line segments R, which connects either the initial point A to the mid-point M or the mid-point M to the terminal point B, is smaller than the reference value (Figure 4 (II)) (step o), a line segment T connecting the initial point A to the terminal point B is computed (step r), and a maximum gap ΔS′ between the conic spline and the line segment T is further computed (step s). If, as a result of these arithmetic operations, the maximum gap ΔS′ is greater than the reference value, i.e. the curvature of the conic spline is large (Figure 4 (II)), the line segments R₁ and R₂ are selected (step t) for output to the buffer circuit 9. However, if the maximum gap ΔS′ is smaller than the reference value, i.e. the curvature is small (Figure 4 (III)), the line segment T connecting the initial point A to the terminal point B is selected (step u) for output.

When these arithmetic operations are completed (step q), the dot signal generating circuit 10 converts the selected line segments R₁ and R₂ or T into dot pattern signals (step g).

In the course of converting the outline into the dot pattern signals, any portion of the outline in which the maximum gap ΔS is less than the reference value is, as discussed above, approximated by a straight line or lines. Hence, it suffices to perform the arithmetic operation for a linear function, requiring a shorter time than in the case of the conic spline, on generation of the dots. It is therefore possible to reduce the time needed for generating the dot pattern for the character. As a matter of course, even if a region in which the maximum gap is smaller than the reference value is approximated by straight lines, since the dot sizes of a display or a printer for producing an outline font are pre-determined depending on the type of machine and the reference value is varied accordingly, there is no adverse influence on character quality.

The embodiment given above deals with Chinese characters. Other alphabets, numerals, Korean characters and so on can, of course, also be treated likewise.

In addition to characters, the invention may be applied to graphs (including shapes such as a circle, triangle, rectangle etc) and to patterns, symbols and marks.

The present character/graphic pattern generating apparatus may be incorporated into a display unit attached thereto, the read out circuit 2 then being operated in accordance with an (outline) display command. Outline display can be effected on a display unit such as a CRT or a liquid crystal panel. Thus, it is feasible to construct a variety of display units for large sized computers, personal computers, work stations and electronic calculators, for example.

The present character/graphic pattern generating apparatus may also be incorporated into a printer attached thereto, the read out circuit 2 then being operated in accordance with an (outline) print command. With this arrangement, printing operations can be performed by a wire dot printer, an ink jet printer, a thermal printer and a laser printer. It is thus possible to provide a variety of printers for use with large sized computers, personal computers, work stations and electronic calculators.

The character/graphic pattern signal generating apparatus described above comprises: the outline data storage means 1 for prescribing the outline of the pattern in terms of conic line data by splitting the outline into a plurality of regions, in each of which both ends are defined as the initial and terminal points and the control point is provided outwardly of the curve, and converting the control point into the auxiliary point having co-ordinates at one point on the curve, and for storing the initial, terminal and auxiliary points as data; the outline data reproducing means 4, 5 for reproducing the conic line from the data read out in response to the character code signal; the selecting means 6, 7, 8 for computing both the linear functions of the lines connecting the initial, terminal and auxiliary points of an outline region to each other and the maximum gap between the curve passing through the initial, terminal and auxiliary points and such lines, and for outputting as outline data the conic line data when the maximum gap is greater than the reference value and the linear function when the maximum gap is smaller than the reference value; and the dot pattern data converting means 10 for outputting the dot signals on the basis of the outline data.

In this construction, calculations are performed on the outline data with an accuracy matching the dot size determined according to the output device, thereby speeding up the generation of the dot patterns without causing any decline in the character quality.

## Claims

1. Apparatus for generating pattern signals for controlling a display device and/or printer of the type which generate images by means of a series of dots, said apparatus comprising outline data storage means (1) for storing data representing pattern outlines, each pattern outline being divided into regions (J₀-Jₙ) and the outline data representing respective outline regions in terms of conic lines, outline reproducing means (3 to 8) responsive to a control signal for reading out selected outline data from the outline data storage means and for reproducing a pattern outline function from the selected outline data, and converting means (9, 10) responsive to an output from the outline reproducing means for generating pattern signals representing the whole pattern, characterised in that each respective outline region is represented as an initial point of, an auxiliary point on, and a terminal point of the associated conic line, and in that the outline reproducing means include selecting means (6, 7, 8) arranged to calculate a linear function for a straight line joining respective ones of the points, to establish whether the maximum gap (ΔS) between the straight and the conic lines joining the respective points has a value less than a reference value (ΔD), said reference value being a function of a dot size of the display device or printer, and, if it has, to select the linear function for supply to the converting means.

2. Apparatus according to claim 1, characterised in that the reference value is equal to a dot diameter.

3. Apparatus according to claim 1, characterised in that the reference value is equal to half a dot diameter.

4. Apparatus according to claim 1, 2 or 3, characterised in that the selecting means are arranged to calculate the linear functions for the straight lines joining the auxiliary point to each of the initial and terminal points.

5. Apparatus according to claim 1, 2 , 3 or 4, characterised in that the selecting means are arranged to calculate the linear function for the straight line joining the initial and terminal points.

6. Apparatus according to claim 5 when dependent from claim 4 characterised in that the selecting means are arranged to select the linear function for the straight line joining the initial and terminal points in preference to the linear functions for the straight lines joining the auxiliary point to each of the initial and terminal points in the event that the maximum gap in each case is less than the reference value.

7. Apparatus according to any preceding claim, characterised in that the selecting means are operable in response to the supply of an attribute signal indicating that the pattern is to be scaled down relative to a standard size.

8. A method of generating pattern signals for controlling a display device and/or printer of the type which generate an image as a series of dots, comprising dividing a pattern outline into regions and representing respective regions in terms of conic lines, formulating an outline function for each region in response to a control signal, and converting the outline functions into pattern signals representing the whole pattern, characterised by representing each respective outline region as an initial point of, an auxiliary point on, and a terminal point of the associated conic line, and selecting a linear function as the outline function if the maximum gap between a straight line and the conic line joining respective ones of the points has a value less than a reference value, said reference value being a function of the dot diameter of the display device and/or printer.

9. A method according to claim 8 characterised by deriving the auxiliary point from a control point of the conic line by joining the mid-points of tangents from each of the initial and terminal points to the control point, and taking the mid-point of the resultant line as the auxiliary point.

10. A method according to claim 8 or 9, characterised by employing the linear functions for formulating the outline functions in response to the supply of an attribute signal indicating that the pattern is to be scaled down from a standard size.

11. A method as claimed in any of claims 8 to 10 wherein the reference value is equal to a dot diameter.

12. A method as claimed in any of claims 8 to 10 wherein the reference value is equal to half a dot diameter.

## Patentansprüche

1. Vorrichtung zur Erzeugung von Muster-Signalen zur Steuerung einer Anzeigevorrichtung und/oder eines Druckers des Typs, der Bilder mittels einer Reihe von Punkten erzeugt, wobei die Vorrichtung aufweist: eine Konturdatenspeichereinrichtung (1) zur Speicherung von Daten, die Muster-Konturen repräsentieren, wobei jede Muster-Kontur in Bereiche (J₀-Jₙ) unterteilt ist und wobei die Konturdaten die betreffenden Konturbereiche in Termen von Kegelschnittlinien repräsentieren,
eine Konturreproduktionseinrichtung (3-8), die auf ein Steuersignal anspricht, um ausgewählte Konturdaten aus der Konturdatenspeichereinrichtung auszulesen und eine Muster-Konturfunktion aus den ausgewählten Konturdaten zu reproduzieren, und
eine Wandlereinrichtung (9, 10), die auf ein Ausgangssignal von der Konturreproduktionseinrichtung anspricht, um Muster-Signale zu erzeugen, die das gesamte Muster repräsentieren,
dadurch gekennzeichnet, daß jeder betreffende Konturbereich als ein Anfangspunkt der zugeordneten Kegelschnittlinie, ein Hilfspunkt auf der zugeordneten Kegelschnittlinie und ein Endpunkt der zugeordneten Kegelschnittlinie repräsentiert ist und daß die Konturreproduktionseinrichtung eine Selektionseinrichtung (6, 7, 8) aufweist, die dazu eingerichtet ist, eine lineare Funktion für eine verschiedene der Punkte miteinander verbindende gerade Linie zu berechnen, festzustellen, ob der maximale Unterschied (ΔS) zwischen den geraden Linien und den Kegelschnittlinien, die die jeweiligen Punkte verbinden, einen Wert hat, der kleiner als ein Referenzwert (ΔD) ist, und, falls er hat, die lineare Funktion zur Bereitstellung für die Wandlereinrichtung auszuwählen, wobei der Referenzwert eine Funktion einer Punktgröße der Anzeigevorrichtung oder des Druckers ist.

2. Vorrichtung nach Anspruch 1, dadurch gekennzeichnet, daß der Referenzwert einem Punktdurchmesser entspricht.

3. Vorrichtung nach Anspruch 1, dadurch gekennzeichnet, daß der Referenzwert einem halben Punktdurchmesser entspricht.

4. Vorrichtung nach Anspruch 1, 2 oder 3, dadurch gekennzeichnet, daß die Selektionseinrichtung dazu eingerichtet ist, die linearen Funktionen für die geraden Linien zu berechnen, welche den Hilfspunkt mit dem jeweiligen Anfangspunkt und dem Endpunkt verbinden.

5. Vorrichtung nach Anspruch 1, 2, 3 oder 4, dadurch gekennzeichnet, daß die Selektionseinrichtung dazu eingerichtet ist, die lineare Funktion für die gerade Linie zu berechnen, welche den Anfangspunkt und den Endpunkt miteinander verbindet.

6. Vorrichtung nach Anspruch 5, soweit dieser auf Anspruch 4 rückbezogen ist, dadurch gekennzeichnet, daß die Selektionseinrichtung dazu eingerichtet ist, die lineare Funktion für die den Anfangspunkt und den Endpunkt miteinander verbindende gerade Linie mit Präferenz vor den linearen Funktionen für die geraden Linien, die den Hilfspunkt mit dem Anfangspunkt und mit dem Endpunkt verbinden, auszuwählen, wenn der maximale Unterschied in jedem Fall kleiner ist als der Referenzwert.

7. Vorrichtung nach irgendeinem der vorhergehenden Ansprüche, dadurch gekennzeichnet, daß die Selektionseinrichtung auf die Bereitstellung eines Attributsignals ansprechend betreibbar ist, welches anzeigt, daß das Muster relativ zu einer Standardgröße zu verkleinern ist.

8. Verfahren zur Erzeugung von Muster-Signalen zur Steuerung einer Anzeigevorrichtung und/oder eines Druckers des Typs, der ein Bild als Reihe von Punkten generiert, wobei eine Muster-Kontur in Bereiche unterteilt wird und jeweilige Bereiche in Termen von Kegelschnittlinien repräsentiert werden, wobei ferner eine Konturfunktion für jeden Bereich in Reaktion auf ein Steuersignal formuliert wird und wobei die Konturfunktionen in Muster-Signale umgewandelt werden, die das gesamte Muster repräsentieren,
dadurch gekennzeichnet, daß jeder betreffende Konturbereich als ein Anfangspunkt der zugeordneten Kegelschnittlinie, ein Hilfspunkt auf der zugeordneten Kegelschnittlinie und ein Endpunkt der zugeordneten Kegelschnittlinie repräsentiert wird und daß eine lineare Funktion als die Konturfunktion ausgewählt wird, falls die maximale Abweichung zwischen einer geraden Linie und der Kegelschnittlinie, die jeweilige der Punkte verbindet, einen Wert hat, der kleiner ist als ein Referenzwert, wobei der Referenzwert eine Funktion des Punktdurchmessers der Anzeigevorrichtung und/oder des Druckers ist.

9. Verfahren nach Anspruch 8, dadurch gekennzeichnet, daß der Hilfspunkt von einem Kontrollpunkt der Kegelschnittlinie abgeleitet wird, indem die Mittelpunkte von Tangenten vom jeweiligen Anfangspunkt und Endpunkt zu dem Kontrollpunkt miteinander verbunden werden und der Mittelpunkt der resultierenden Linie als der Hilfspunkt herangezogen wird.

10. Verfahren nach Anspruch 8 oder 9, dadurch gekennzeichnet, daß die linearen Funktionen verwendet werden, um die Konturfunktionen in Reaktion auf die Bereitstellung eines Attributsignals zu formulieren, das angibt, daß das Muster, ausgehend von einer Standardgröße, herabzuskalieren ist.

11. Verfahren nach einem der Ansprüche 8 bis 10, wobei der Referenzwert gleich einem Punktdurchmesser ist.

12. Verfahren nach einem der Ansprüche 8 bis 10, wobei der Referenzwert gleich einem halben Punktdurchmesser ist.

## Revendications

1. Appareil générateur de signaux de configuration pour commander un dispositif d'affichage et/ou une imprimante du type qui forment des images au moyen d'une série de points, ledit appareil comprenant un moyen de mémoire des données de contour (1) pour mémoriser des données représentant des contours de configuration, chaque contour de configuration étant partagé en régions (J₀-Jₙ), et les données de contour représentant les régions respectives du contour sous forme de courbes coniques, des moyens de reproduction du contour (3 à 8) répondant à un signal de commande pour lire les données de contour sélectionnées dans le moyen de mémoire des données de contour, et pour reproduire une fonction de contour de configuration, à partir des données de contour sélectionnées, et des moyens de conversion (9, 10) répondant à une sortie des moyens de reproduction du contour pour générer des signaux de configuration représentant toute la configuration, caractérisé en ce que chaque région particulière du contour est représentée par un point initial, un point auxiliaire et un point terminal de la courbe conique associée, et en ce que les moyens de reproduction du contour comprennent des moyens de sélection (6, 7, 8) agencés pour calculer une fonction linéaire du segment de droite reliant certains points particuliers parmi les points ci-dessus, pour définir si l'écart maximal (ΔS) entre le segment de droite et la courbe conique reliant les points correspondants a une valeur inférieure à une valeur de référence (ΔD), ladite valeur de référence étant une fonction de la dimension du point du dispositif d'affichage ou de l'imprimante et, si cet écart est plus petit, pour calculer la fonction linéaire à appliquer aux moyens de conversion.

2. Appareil selon la revendication 1, caractérisé en ce que la valeur de référence est égale au diamètre d'un point.

3. Appareil selon la revendication 1, caractérisé en ce que la valeur de référence est égale à la moitié du diamètre d'un point.

4. Appareil selon l'une quelconque des revendications 1, 2 ou 3, caractérisé en ce que les moyens de sélection sont agencés pour calculer les fonctions linéaires des segments de droite joignant le point auxiliaire à chacun parmi le point initial et le point final.

5. Appareil selon l'une quelconque des revendications 1, 2, 3 ou 4, caractérisé en ce que les moyens de sélection sont agencés pour calculer la fonction linéaire du segment de droite reliant le point initial et le point final.

6. Appareil selon la revendication 5, lorsqu'elle dépend de la revendication 4, caractérisé en ce que les moyens de sélection sont agencés pour sélectionner la fonction linéaire du segment de droite joignant le point initial au point final, de préférence aux fonctions linéaires des segments de droite joignant le point auxiliaire à chacun du point initial et du point final dans le cas où l'écart maximal dans chaque cas est inférieur à la valeur de référence.

7. Appareil selon l'une quelconque des revendications précédentes, caractérisé en ce que les moyens de sélection fonctionnent en réponse à l'application d'un signal d'attribut indiquant que la configuration doit être réduite en dimension par rapport à une dimension standard.

8. Procédé de génération de signaux de configuration pour commander un dispositif d'affichage et/ou une imprimante du type qui construit une image sous forme d'une série de points, comprenant le partage d'un contour de configuration en régions et la représentation des régions respectives par des courbes coniques, la formulation d'une fonction de contour pour chaque région en réponse à un signal de commande et la conversion des fonctions de contour en signaux de configuration représentant la totalité de la configuration, caractérisé en ce qu'il consiste à représenter chaque région respective de contour sous forme d'un point initial, d'un point auxiliaire et d'un point final de la courbe conique associée, à sélectionner une fonction linéaire comme fonction de contour si l'écart maximal entre un segment de droite et la courbe conique reliant des points respectifs parmi les points ci-dessus a une valeur inférieure à une valeur de référence, ladite valeur de référence étant fonction du diamètre des points du dispositif d'affichage et/ou de l'imprimante.

9. Procédé selon la revendication 8, caractérisé par la déduction du point auxiliaire d'un point de commande de la courbe conique en joignant les milieux des tangentes partant du point initial et du point final au point de commande, et en prenant le milieu de la droite résultante comme point auxiliaire.

10. Procédé selon la revendication 8 ou 9, caractérisé en ce qu'il emploie des fonctions linéaires pour formuler les fonctions de contour en réponse à l'application d'un signal d'attribut indiquant que la configuration doit être réduite par rapport à une dimension standard.

11. Procédé selon l'une quelconque des revendications 8 à 10, dans lequel la valeur de référence est égale au diamètre d'un point.

12. Procédé selon l'une quelconque des revendications 8 à 10, dans lequel la valeur de référence est égale à la moitié du diamètre d'un point.
